# EUROPÄISCHE PATENTSCHRIFT

(11) **EP 2 414 610 B1**
(45) Veröffentlichungstag und Bekanntmachung des Hinweises auf die Patenterteilung: **04.03.2015**
(21) Anmeldenummer: 10710563.7
(22) Anmeldetag: 17.03.2010
(51) Int. Cl.: E05F 15/689, E05F 15/41

(54) **VERFAHREN ZUM ERMITTELN EINES POSITIONSPUNKTES EINES VERFAHRBAREN ELEMENTS**
METHOD TO DETERMINE A PARTICULAR POSITION OF A MOVEABLE ELEMENT
METHODE POUR DETERMINER UNE POSITION PARTICULIERE D'UN ELEMENT MOBILE

(30) Priorität: 03.04.2009 DE 102009002172
(43) Veröffentlichungstag der Anmeldung: 08.02.2012
(73) Patentinhaber: Robert Bosch GmbH, 70442 Stuttgart (DE)
(72) Erfinder: DUVAL, Fabrice, H-1053 Budapest (HU); LECOULTRE, Paul, F-67760 Gambsheim (FR); PRUESSEL, Holger, 77830 Buehlertal (DE); BEYER, Laurent, F-67760 Gambsheim (FR)
(86) Internationale Anmeldenummer: PCT/EP2010/053429
(87) Internationale Veröffentlichungsnummer: WO 2010/112336

(56) Entgegenhaltungen:
- EP-A2- 1 586 731
- WO-A1-01/92975
- DE-A1-102004 011 332
- US-B1- 6 208 101

## Beschreibung

Die Erfindung betrifft ein Steuergerät und ein Verfahren zum Ermitteln eines Positionspunktes eines verfahrbaren Elements, insbesondere einer Scheibe oder eines Daches eines Kraftfahrzeugs, das mittels eines Antriebs in wenigstens eine elastische Aufnahme eingefahren werden kann.

### Stand der Technik

Verfahrbare Elemente, insbesondere Scheiben oder Dächer, werden beispielsweise in Kraftfahrzeugen als elektrische betätigte Fenster oder als elektrisch betätigte Schiebedächer eingesetzt. Die dafür vorgesehenen elektrische Schließvorrichtungen der Scheiben oder Dächer müssen sowohl einen Einklemmschutz gewährleisten, um vor Verletzungen des Benutzers durch Einklemmen von Körperteilen weitgehend auszuschließen, als auch das verfahrbare Element sicher in eine elastische Aufnahme verfahren, so dass das verfahrbare Element zusammen mit der elastischen Aufnahme den Innenraum des Kraftfahrzeugs gegenüber äußeren Witterungseinflüssen abdichtet.

In der EP 0 883 724 B1 wird ein Verstellantrieb mit Einklemmschutz für verfahrbare Elemente beschieben, bei dem in einem bestimmten Verstellbereich innerhalb eines vorgegebenen Positionsbereichs vor Einfahren des verfahrbaren Elements in eine elastische Aufnahme die Drehzahl und/oder die Leistung des Verstellantriebs nach einer vorgegebenen mathematischen Funktion abgesenkt wird, so dass das verfahrbare Element mit einer Minimalgeschwindigkeit in die elastische Aufnahme einfährt. Die Position für das Anhalten des verfahrbaren Elements wird dabei aus dessen indirekt gemessener Position bestimmt.

Die Position zum Anhalten des verfahrbaren Elements unterliegt Verschleiß, Spannungsschwankungen im Bordnetz des Fahrzeugs oder klimatische Einflüsse auf die Schließvorrichtung, so dass die gewünschte Halteposition oft nicht mit der angefahrenen Halteposition übereinstimmt. Um dies zu vermeiden, wird in der EP 0 697 305 A1 ein Verstellantrieb für Fenster- und Schiebedächer mit einem Steuersystem vorgeschlagen, das aus der Stromaufnahme des Motors die Position des verfahrbaren Elements ermittelt. Aus einem Anstieg im Stromverlaufs wird auf eine Blockierung des Elektromotors des Antriebs geschlossen und ein Anhalten des Antriebs eingeleitet. Dieses Vorgehen führt dazu, dass das verfahrbare Element unabgebremst in die elastische Aufnahme einfährt und auf diese Weise deutlich hörbare Geräusche verursacht.

Die DE 102004011332 offenbart die Merkmale des Oberbegriffs des Anspruchs 1 und des Anspruchs 4.

### Offenbarung der Erfindung

Es ist daher Aufgabe der Erfindung, ein Verfahren zum Ermitteln eine Positionspunktes eines verfahrbaren Elements zur Verfügung zu stellen, das zuverlässig den gewünschten Positionspunkt des verfahrbaren Elements ermittelt.

Diese Aufgabe wird durch ein Steuergerät gemäß Anspruch 1 und ein Verfahren gemäß Anspruch 4 gelöst. Bevorzugte Ausführungsformen sind in den abhängigen Ansprüchen angegeben.

Erfindungsgemäß wurde erkannt, dass die Blockierung eines Antriebs eines Antriebssystems eines verfahrbaren Elements dadurch vermieden werden kann, indem während des Verfahrens des verfahrbaren Elements fortlaufend eine Federsteifigkeit ermittelt und überwacht wird, wobei bei einer Überschreitung eines Schwellenwertes der Antrieb ein Positionspunkt ermittelt wird.

Auf diese Weise wird sichergestellt, dass der ermittelte Positionspunkt des verfahrbare Element, z.B. eine elektrisch betätigte Scheibe oder ein elektrisch betätigtes Scheibedach eines Kraftfahrzeugs, unabhängig von klimatischen Einflüssen, dem Verschleiß der elastischen Aufnahme oder des Antriebssystems des verfahrbaren Elements zuverlässig ermittelt wird.

Gemäß einer Ausführungsform der Erfindung wird nach einer definierten Anzahl von Einfahrvorgängen in die elastische Aufnahme der Positionspunkt abermals ermittelt. Dies hat den Vorteil, dass der Positionspunkt an den Verschleiß der elastischen Aufnahme und des Antriebssystems, aber auch an klimatische Veränderungen, z.B. Temperaturschwankungen, angepasst wird.

Nachfolgend wird die Erfindung anhand von Figuren näher erläutert. Dabei zeigt:
Fig. 1 eine schematische Schnittansicht einer Scheibe beim Einfahren in eine elastische Aufnahme;
Fig. 2 den Stromverlauf eines Elektromotors über der Zeit;
Fig. 3 ein Flussdiagramm des erfindungsgemäßen Verfahrens; und
Fig. 4 einen schematischen Aufbau eines erfindungsgemäßen Steuergeräts.

Im Folgenden wird die Ermittlung des Positionspunktes anhand der Ermittlung einer Haltepositions in einem Soft-Stop Bereich veranschaulicht, wobei der Positionspunkt in seiner Lage und in seiner Ermittlung dem Haltepunkt entspricht.

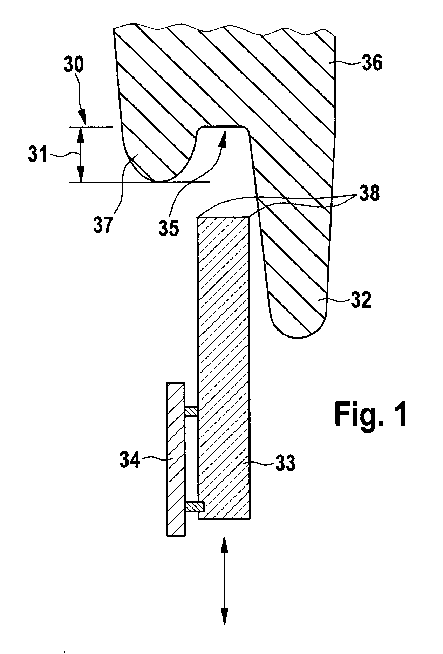

Fig. 1 zeigt eine schematische Schnittansicht einer Scheibe 33 als verfahrbares Element beim Einfahren in eine elastische Aufnahme 36. Die Scheibe 33 wird durch einen Fensterheber 34 verschoben, so dass der Innenraum eines Kraftfahrzeugs geöffnet oder verschlossen wird. Zum Öffnen oder Schließen der Scheibe 33 kann diese nach unten oder nach oben verfahren werden. Seitlich wird dabei die Scheibe 33 in nicht dargestellten Führungen der Fahrzeugtüre geführt. Die elastische Aufnahme 36 weist zwei Dichtlippen 32, 37 auf, wobei die Dichtlippen 32, 37 durch eine Ausnehmung 35 voneinander getrennt sind. Fährt die Scheibe 33 bei einem Schließvorgang in die Ausnehmung 35 ein, so wird die Scheibe 33 an ihren oberen Kanten 38 durch Kontakt und durch Überlappung mit den Dichtlippen 32, 37 abgedichtet. Beim Einfahren der Scheibe 33 in die Ausnehmung 35 wird der Antrieb des Fensterhebers 34 abgeschaltet, sobald die Scheibe 33 mit ihrer oberen Kante 38 in einen Soft-Stop Bereich 31 einfährt. Der Soft-Stop Bereich 31 stellt einen Toleranzbereich dar, in dem die obere Kante 38 der Scheibe 33 zum Stehen kommt, ohne die elastische Aufnahme 36 zu komprimieren, aber gleichzeitig der Innenraum des Kraftfahrzeugs zuverlässig verschlossen ist. Der gewünschte Soft-Stop Bereich 31 entspricht etwa der Tiefe 30 der Ausnehmung 35. Unter Halteposition wird die Position der oberen Kante 38 der Scheibe 33 verstanden in der sie zu Stehen kommt. Die Halteposition kann auch ausserhalb des Soft-Stop Bereichs 31 liegen. Fährt die Scheibe 33 so weit in die elastische Aufnahme 36 ein, dass die Scheibe 33 die elastische komprimiert, führt dies zu einem Blockieren des Elektromotors des Fensterhebers 34, sowie zu einem unnötigen Verschleiß des Fensterhebers, indem die Mechanik des Fensterhebers unter Spannung zu Stehen kommt. Üblicherweise wird der Antrieb des Fensterhebers 34 erst abgeschalten, wenn dieser blockiert oder wenn eine bestimmte, in einem Steuergerät abgelegte Position der Scheibe 33 durchfahren wird. Durch klimatische Veränderungen etwa Temperaturschwankungen, sowie Verschleiß des Fensterhebers 34 verändert sich die erwünschte Halteposition der oberen Kante 38 der Scheibe 33, so dass der Antrieb des Fensterhebers 34 zu spät angehalten wird und die Scheibe 33 die elastische Aufnahme 36 so komprimiert, dass der Schließvorgang geräuschbehaftet ist.

In der Ausführungsform wird indirekt der Kraftverlauf für das Einfahren der Scheibe 33 in die elastische Aufnehmung 36 beobachtet. Um die Kraft zu ermitteln, wird der Drehzahleinbruch des Elektromotors des Fensterhebers 34 herangezogen. Hierfür weist der Elektromotor einen Drehzahlsensor mit z.B. einem Hallsensor auf. Ebenso lässt sich durch den Drehzahlsensor auch die Anzahl der vollzogenen Umdrehungen und somit die Position der Scheibe 33 ermitteln.

In einer weiteren Ausführungsform der Erfindung wird der Haltepunkt als Positionspunkt zur Eichung eines weiteren Systems, insbesondere eines Einklemmschutzsystems, genutzt. Dies hat den Vorteil, dass das weitere System über die Nutztungsdauer des Systems an Verschleiss, Spannungsschwankungen des Bordnetzes oder klimatische Bedingungen anpassbar ist.

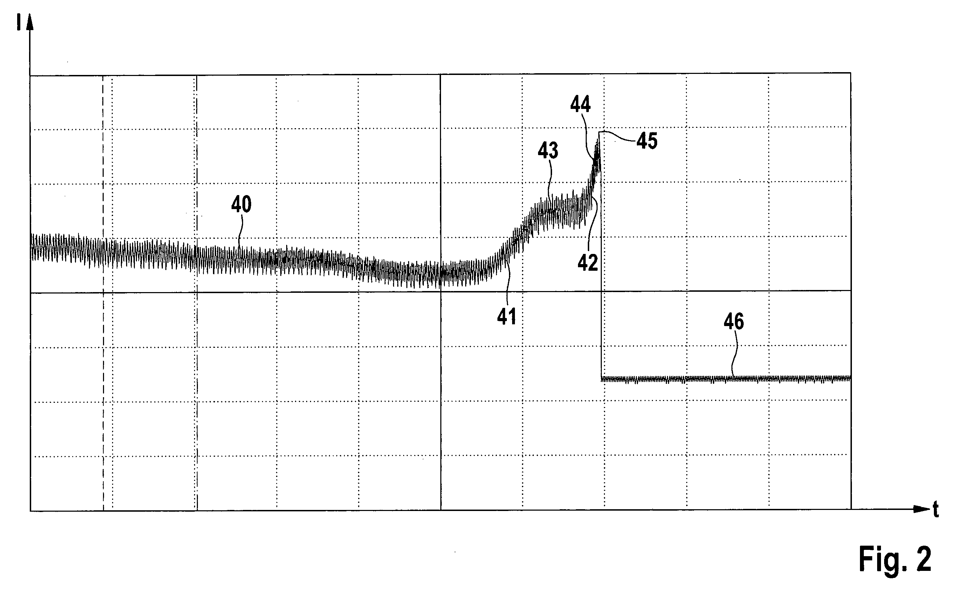

Fig. 2 zeigt ein Diagramm des Stromverlaufs über der Zeit. Dabei zeigt der Stromverlauf in der linken Hälfte des Diagramms einen nahezu horizontalen Verlauf, welcher dem Öffnungs- oder Schließvorgang der in Fig. 1 gezeigten Scheibe 33 durch den Fensterheber 34 entspricht. Berührt die Scheibe 33 beim Schließvorgang mit ihrer oberen Kante 38 die Dichtlippe 32, 37 so ist zum Verschieben der Scheibe 33 ein erhöhter Kraftaufwand notwendig. Der erhöhte Kraftaufwand resultiert in einer niedrigeren Drehzahl des Elektromotors des Fensterhebers 34, sowie in einer erhöhten Stromaufnahme. Der dargestellte Verlauf der Stromaufnahme entspricht hierdurch dem benötigten Kraftverlauf bzw. der Kraftänderung zum Schließen der Scheibe 33. Durch das Verschieben der Scheibe 33 entlang der Dichtlippen 32, 37 steigt die Stromaufnahme im Bereich 41 aufgrund der sich leicht verengenden Seitenflächen der Ausnehmung 35 an.

Sobald sich die benötigte Kraft zum Einfahren der Scheibe 33 in die Ausnehmung 35 eingependelt hat, bildet die Stromaufnahme einen plateauförmigen Bereich 43 aus. Wird die Scheibe 33 durch den Fensterheber 34 weiter in die Ausnehmung 35 verfahren, so verengt sich die Ausnehmung 35 in ihrem oberen Bereich stärker, so dass der Kraftaufwand zum Verschieben der Scheibe 33 im Bereich 44 ansteigt. Nach dem Überschreiten 45 eines bestimmten Schwellenwerts der Stromaufnahme wird der Antrieb abgeschaltet und fällt auf Null im Bereich 46 ab, um ein Blockieren des Antriebs zu verhindern. Die Steigung des aufgenommenen Kraftverlaufes bzw. Stromverlaufes entspricht einer Federsteifigkeit. Die Federsteifigkeit ist dabei abhängig von der Position der oberen Kante 38 in der elastischen Aufnahme 36. Je tiefer dabei die obere Kante 38 in die Ausnehmung 35 einfährt, desto stärker steigt die Federsteifigkeit an. Überschreitet die Federsteifigkeit einen Schwellenwert so wird der Antrieb des Fensterheber 34 angehalten. Durch ein rechtzeitiges Anhalten 45 des Antriebs kann ein Blockieren und ein Verspannen des Fensterhebers 34 vermieden werden.

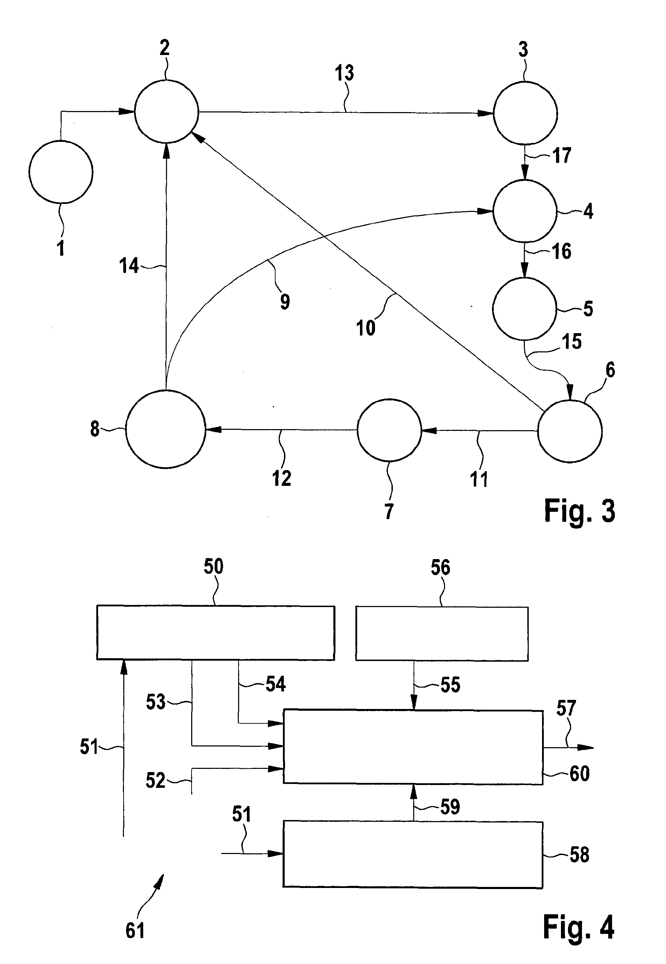

Fig. 3 zeigt ein Flussdiagramm des erfindungsgemäßen Verfahrens, wobei sowohl die Halteposition im Soft-Stop Bereich detektiert, als eine Halteposition neu erlernt wird. Im Ursprungszustand 1 verfügt das Steuergerät über keinen hinterlegten Wert der Halteposition der Scheibe 33 des in Fig. 1 dargestellten Fensterhebers 34, sondern nur über die für das erfindungsgemäße Verfahren notwendigen aber fahrzeugsspezifischen Schwellenwerte für Kraft und Federsteifigkeit. Bei Inbetriebnahme des Fensterhebers 34 wird in dem Steuergerät einem Zähler im Zustand 2 der Wert Null zugewiesen. Wird der Fensterheber 34 zum ersten Mal verfahren, so sind die Haltepositionen für eine verschlossene oder geöffnete Scheibe des Fensterhebers 34 nicht bekannt. Die Haltepositionen werden z.B. dadurch bestimmt, indem die Scheibe 33 soweit in die in Fig. 1 gezeigte elastische Aufnahme 36 fährt, bis die Scheibe 33 nicht mehr verfahrbar ist und der Antrieb im Ereignis 13 blockiert. Diese Position wird in einem Speicher des Steuergeräts im Zustand 3 abgelegt. Das Erlernen der Halteposition ist notwendig, da die Halteposition im weiteren Verfahren als Vorgabe für einen Toleranzbereich dient.

Wird die Scheibe bei einem weiteren Schließvorgang z.B. bei Zustand 9 oder 17 abermals verfahren, so wird die Position des Scheibe 33 überwacht, indem die Anzahl der Umdrehungen des im Fensterheber 34 befindlichen Elektromotors zur Errechnung der Verfahrstrecke der Scheibe 33 unter Zuhilfenahme der Getriebeübersetzung des Fensterhebers 34 verwendet wird. Hierzu verfügt der Elektromotor über einen Sensor, der z.B. als Hallsensor, der die Umdrehungen des Elektromotors detektiert. Durch die Detektion der Umdrehungen des Elektromotors kann das Steuergerät ebenso die Verfahrgeschwindigkeit des Fensterhebers 34 ermitteln.

Im Zustand 4 überwacht das Steuergerät die Position der oberen Kante 38 der Scheibe 33 während des Verfahrens. Befindet sich die obere Kante 38 der Scheibe 33 im Ereignis 16 im Soft-Stop Bereich der elastischen Aufnahme 36, so startet das Steuergerät die Kraftüberwachung. In diesem optionalen Ereignis wird die aktuelle absolute Kraft des Elektromotors ermittelt. Dadurch kann beispielsweise ein hartes Anschlagen der Scheibe 33 in der elastischen Aufnahme 36 ausgefilltert werden. Der Soft-Stop Bereich der elastischen Aufnahme 36 entspricht einem vordefinierten Wert, wobei dessen absolute Position abhängig von der mittels des Zustands 3 ermittelten Halteposition ist. Die Kraft bzw. die Kraftänderung ist ermittelbar aus dem Drehzahlrückgang des Elektromotors des Fensterhebers 34. Wird die Kraft aus der Drehzahl ermittelt gilt, dass je stärker die Drehzahl des Elektromotors abfällt, der Kraftaufwand zum Verfahren der Scheibe 33 ansteigt. Die Kraft kann aber auch aus der Stromaufnahme des Elektromotors oder mittels direkter Kraftmessung an zumindest einem der Bauteile des Fensterhebers 34 erfolgen. Übersteigt die Kraft im Ereignis 15 bei deren Beobachtung im Zustand 5 einen Schwellenwert, der in dem Steuergerät hinterlegt ist, so führt das Steuergerät einen Test durch, ob die Soft-Stop Funktion im Zustand 6 verfügbar ist. Unter der Soft-Stop Funktion wird verstanden, dass der Fensterheber die Scheibe 33 in die elastische Aufnahme 36 einfährt, aber den Elektromotor rechtzeitig stoppt, so dass die Scheibe 33 nicht mit ihrer maximalen Geschwindigkeit bis zum Ende der Ausnehmung 35 verschoben wird und die elastische Aufnahme komprimiert. Auf diese Weise wird sichergestellt, dass das Schließen der Scheibe 33 ohne deutliche Geräusche, die auftreten, falls die Soft-Stop Funktion nicht verfügbar ist, vollzogen wird. Ist die Soft-Stop Funktion aufgrund von Störungen im Ereignis 10 nicht verfügbar, so wird die Scheibe 33 in die elastische Aufnahme 36 gefahren und bei einem Blockieren des Elektromotors angehalten und dieser abgeschalten.

Ist im Ereignis 11 die Soft-Stop Funktion verfügbar, so beobachtet das Steuergerät ausgelöst durch das Überschreiten des Schwellenwerts der Kraft im Ereignis 15 eine Federsteifigkeit. Die Federsteifigkeit wird aus der Kraftänderung und dem verfahrenen Weg ermittelt. Dabei ist die Federsteifigkeit lokal abhängig und kann somit zur Positionierung der Scheibe 33 verwendet werden. Überschreitet bei der Beobachtung im Zustand 7 die Federsteifigkeit einen Schwellenwert im Ereignis 12, so wird der Motor im Zustand 8 angehalten. Die ermittelte Halteposition im Soft-Stop Bereich der oberen Kante 38 der Scheibe 33 hat den Vorteil, dass die elastische Aufnahme 36 nicht komprimiert ist und die obere Kante 38 der Scheibe 33 sicher in der elastischen Aufnahme 36 sitzt. Des Weiteren wird in Zustand 8 zu dem vorhandenen Wert des Zählers von Zustand 2 der Wert eins addiert. Entspricht der neue Wert des Zählers bei einem Vergleich im Zustand 8 einem vordefinierten zweitem Wert, so wird der Zähler im Ereignis 14 wieder auf Null zurückgesetzt und ein neuer Einfahrvorgang der Scheibe 33 startet vom Zustand 2 aus. Entspricht der neue Wert des Zählers im Ereignis 9 nicht dem vordefinierten zweiten Wert, so bleibt der Wert des Zählers unverändert. Wird der Fensterheber 34 abermals verfahren, so beginnt der nächste Einfahrvorgang des Fensterhebers 34 nicht im Zustand 2, sondern im Zustand 4.

Das Zurücksetzen des Zählers hat den Vorteil, dass die Halteposition der oberen Kante 38 der Scheibe 33 in die Ausnehmung 35 in regelmäßigen Abständen überprüft wird. Auf diese Weise ist sich der Fensterheber 34 an Verschleiß oder an geänderte klimatische Bedingungen selbstständig anpassbar, da die Halteposition in regelmäßigen Abständen neu ermittelt wird.

Ferner ist es denkbar, dass die ermittelte Halteposition mit weiteren vorher ermittelten Haltepositionen verglichen wird, um Fehler oder Defekte in der Mechanik des Fensterhebers zu detektieren. Die vorherigen Haltepositionen können z.B. in einer Speichereinheit in dem Steuergerät abgelegt sein, um sie mit der ermittelten Halteposition zu vergleichen.

Fig. 4 zeigt einen schematischen Aufbau eines erfindungsgemäßen Steuergeräts 61. Hierbei sind verschiedene Module eines Steuergeräts 61 des in Fig. 1 gezeigten Fensterhebers 34 als Rechtecke symbolisch dargestellt. Das Steuergerät 61 weist dabei ein erstes Modul 50 zur Bewertung der Kraft und der Federsteifigkeit auf, sowie ein viertes Modul 56, welches eine Blockierung des Antriebs ermittelt und eine Halteposition der Scheibe 33 bestimmt. Des Weiteren weist das Steuergerät 61 ein drittes Modul 58 auf, welches überprüft, ob ein zweites Modul 60 verfügbar ist. Die einzelnen Module 50, 56, 60, 58 sind mittels Datenpfade 51 bis 55, 59, über die Informationen übertragen werden, miteinander verknüpft. Dabei werden über den Datenpfad 51 die dynamischen Informationen z.B. Spannung oder Motordrehzahl des Elektromotors des Antriebs zum ersten und zum dritten Modul 50, 58 übertragen. Aus diesen Informationen ermittelt das erste Modul 50 die Kraft zum Verfahren der Scheibe 33 sowie die Federsteifigkeit. Das zweite Modul 60 ermittelt aus den zur Verfügung stehenden Informationen durch Vergleich der Federsteifigkeit mit einem Schwellenwert die Halteposition der Scheibe 33 und hält den Antrieb über einen Datenpfad 57 an. Ebenso hält das zweite Modul 60 den Antrieb an, falls das vierte Modul 56 eine Information über einen blockierten Zustand des Antriebs über den Datenpfad 55 sendet. Über den Datenpfad 59 wird die Information bereitgestellt, ob die Soft-Stop Funktion des dritten Moduls 58 verfügbar ist. Ebenso wie das erste Modul 50 erhält das dritte Modul 58 über den Datenpfad 51 dynamische Informationen über den Antrieb. Durch die über die Datenpfade 51 bis 55, 59 übertragenen Informationen kann das vierte Modul 60 eine Halteposition ermitteln, die im Soft-Stop Bereich liegt, sodass der Verschleiß des Fensterhebers und die Geräuschentwicklung beim Einfahren in die elastische Aufnahme 36 reduziert ist.

Dem Fachmann ist selbstverständlich geläufig, dass die Reihenfolge der einzelnen Verfahrensschritte beispielhaft ist, wesentlich dabei ist jedoch, dass eine Federsteifigkeit zur Ermittlung des Positionspunkts bzw. des Haltepunkts eines verfahrbaren Elements herangezogen wird, um die Position des verfahrbare Elements beim Einfahren in eine elastische Aufnahme z.B. beim Öffnen und Schließen einer Scheibe eines Kraftfahrzeuges zuverlässig und selbstständig zu ermitteln.

## Patentansprüche

1. Steuergerät (61) zum Ansteuern eines Antriebs, wobei der Antrieb ein verfahrbares Element, insbesondere eine Scheibe (33) oder ein Dach eines Kraftfahrzeugs in eine elastische Aufnahme (36) verfährt, wobei das Steuergerät (61) ein erstes Modul (50) zum Ermitteln einer Federsteifigkeit aufweist, **die aus einer Kraftänderung und dem verfahrenen Weg des verfahrenden Elements ermittelt wird**, **dadurch gekennzeichnet, dass** das Steuergerät (61) ein zweites Modul (60) zum Vergleich der Federsteifigkeit mit einem Schwellenwert aufweist, wobei das zweite Modul (60) des Steuergeräts (61) einen Positionspunkt in einem Soft-Stopp Bereich ermittelt, wenn die Federsteifigkeit einen Schwellenwert überschreitet, wobei das zweite Modul (60) am Positionspunkt den Antrieb anhält, wobei das Steuergerät (61) eine Speichereinheit aufweist, in der der wenigstens eine Positionspunkt und der Schwellenwert der Federsteifigkeit abgelegt ist.

2. Steuergerät (61) nach Anspruch 1, **dadurch gekennzeichnet, dass** der Positionspunkt zur Eichung eines weiteren Systems, insbesondere eines Einklemmschutzsystems dient.

3. Steuergerät (61) nach einem der Ansprüche 1 bis 2, **dadurch gekennzeichnet, dass** in der Speichereinheit der Schwellenwert der Kraft abgelegt ist.

4. Verfahren zum Ermitteln eines Positionspunktes eines verfahrbaren Elements, insbesondere einer Scheibe (33) oder eines Daches eines Kraftfahrzeugs, das mittels eines Antriebs in wenigstens eine elastische Aufnahme (36) eingefahren werden kann, mit den folgenden Schritten:
- Fortlaufendes Ermitteln der Federsteifigkeit in Bezug auf das in die elastische Aufnahme (36) verfahrende Element (33), **wobei die Federsteifigkeit aus einer Kraftänderung und dem verfahrenen Weg des verfahrenden Elements ermittelt wird, gekennzeichnet durch** das
- Ermitteln des Positionspunktes in einem Soft-Stopp Bereich bei Überschreitung eines vorgegebenen Schwellenwertes der Federsteifigkeit ,
wobei am Positionspunkt der Antrieb angehalten wird, und der wenigstens eine Positionspunkt und der Schwellenwert der Federsteifigkeit in einer Speichereinheit eines Steuergeräts (61) gemäß Anspruch 1 abgelegt wird.

5. Verfahren nach Anspruch 4, **dadurch gekennzeichnet, dass** das Ermitteln der Kraftänderung bei Erreichen einer vorgegebenen Position des verfahrbaren Elements gestartet wird.

6. Verfahren nach Anspruch 4 oder 5, **dadurch gekennzeichnet, dass** der Positionspunkt zur Eichung eines weiteren Systems, insbesondere eines Einklemmschutzsystems, dient.

7. Verfahren nach einem Ansprüche 4 bis 6, **dadurch gekennzeichnet, dass** der ermittelte Positionspunkt mit einem vorgegebenen Positionspunkt verglichen wird, um die Plausibilität des ermittelten Positionspunkt zu überprüfen.

8. Verfahren nach Anspruch 6, **dadurch gekennzeichnet, dass** nach einer definierten Anzahl von Einfahrvorgängen in die elastische Aufnahme die vorgegebene Positionspunkt neu festgelegt wird.

9. Verfahren nach einem der Ansprüche 4 bis 8, **dadurch gekennzeichnet, dass** das Verfahren abschaltbar ist.

## Claims

1. Control device (61) for actuating a drive, wherein the drive moves a movable element, in particular a window (33) or a roof of a motor vehicle into an elastic receptacle (36), wherein the control device (61) has a first module (50) for determining a spring stiffness, which is determined from a change in force and the distance by which the moving element moves, **characterized in that** the control device (61) has a second module (60) for comparing the spring stiffness with a threshold value, wherein the second module (60) of the control device (61) determines a position point in a soft stop region when the spring stiffness exceeds a threshold value, wherein the second module (60) stops the drive at the position point, wherein the control device (61) has a storage unit in which the at least one position point and the threshold value of the spring stiffness are stored.

2. Control device (61) according to Claim 1, **characterized in that** the position point serves to calibrate a further system, in particular an anti-trapping system.

3. Control device (61) according to either one of Claims 1 and 2, **characterized in that** the threshold value of the force is stored in the storage unit.

4. Method for determining a position point of a movable element, particularly of a window (33) or of a roof of a motor vehicle which can be advanced into at least one elastic receptacle (36) by means of a drive, comprising the following steps:
- continuously determining the spring stiffness in relation to the element (33) which moves into the elastic receptacle (36), wherein the spring stiffness is determined from a change in force and the distance by which the moving element moves, **characterized by** the
- determination of the position point in a soft stop region when a predefined threshold value of the spring stiffness is exceeded,
wherein the drive is stopped at the position point, and the at least one position point and the threshold value of the spring stiffness are stored in a storage unit of a control device (61) according to Claim 1.

5. Method according to Claim 4, **characterized in that** the determination of the change in force is started when a predefined position of the movable element is reached.

6. Method according to Claim 4 or 5, **characterized in that** the position point serves to calibrate a further system, in particular an anti-trapping system.

7. Method according to one of Claims 4 to 6, **characterized in that** the position point which is determined is compared with a predefined position point in order to check the plausibility of the position point which is determined.

8. Method according to Claim 6, **characterized in that**, after a defined number of advancing processes into the elastic receptacle, the predefined position point is re-defined.

9. Method according to one of Claims 4 to 8, **characterized in that** the method can be switched off.

## Revendications

1. Appareil de commande (61) pour commander un entraînement, l'entraînement déplaçant un élément déplaçable, en particulier une vitre (33) ou un toit d'un véhicule automobile, dans un logement élastique (36), l'appareil de commande (61) présentant un premier module (50) pour déterminer une rigidité de ressort, qui est déterminée à partir d'une variation de force et de la course parcourue par l'élément se déplaçant, **caractérisé en ce que** l'appareil de commande (61) présente un deuxième module (60) pour comparer la rigidité de ressort avec une valeur seuil, le deuxième module (60) de l'appareil de commande (61) déterminant une position dans une plage d'arrêt progressif, lorsque la rigidité de ressort dépasse une valeur seuil, le deuxième module (60) arrêtant l'entraînement dans cette position, l'appareil de commande (61) présentant une unité de mémoire dans laquelle l'au moins une position et la valeur seuil de la rigidité de ressort sont consignées.

2. Appareil de commande (61) selon la revendication 1, **caractérisé en ce que** la position sert à calibrer un système supplémentaire, en particulier un système de protection contre le coincement.

3. Appareil de commande (61) selon l'une quelconque des revendications 1 à 2, **caractérisé en ce que** la valeur seuil de la force est consignée dans l'unité de mémoire.

4. Procédé pour déterminer une position d'un élément déplaçable, en particulier d'une vitre (33) ou d'un toit d'un véhicule automobile, qui peut être introduit(e) dans au moins un logement élastique (36) au moyen d'un entraînement, comprenant les étapes suivantes :
- détermination en continu de la rigidité de ressort par rapport à l'élément (33) se déplaçant dans le logement élastique (36), la rigidité de ressort étant déterminée à partir d'une variation de force et de la course parcourue par l'élément se déplaçant, **caractérisé par**
- la détermination de la position dans une plage d'arrêt progressif, lors du dépassement d'une valeur seuil prédéfinie de la rigidité de ressort,
l'entraînement étant arrêté dans cette position et l'au moins une position et la valeur seuil de la rigidité de ressort étant consignées dans une unité de mémoire d'un appareil de commande (61) selon la revendication 1.

5. Procédé selon la revendication 4, **caractérisé en ce que** la détermination de la variation de force est commencée à l'obtention d'une position prédéfinie de l'élément déplaçable.

6. Procédé selon la revendication 4 ou 5, **caractérisé en ce que** la position sert à calibrer un système supplémentaire, en particulier un système de protection contre le coincement.

7. Procédé selon l'une quelconque des revendications 4 à 6, **caractérisé en ce que** la position déterminée est comparée à une position prédéfinie, afin de contrôler la plausibilité de la position déterminée.

8. Procédé selon la revendication 6, **caractérisé en ce qu'**après un nombre défini d'opérations d'introduction dans le logement élastique, la position prédéfinie est fixée à nouveau.

9. Procédé selon l'une quelconque des revendications 4 à 8, **caractérisé en ce que** le procédé peut être déconnecté.
